Europäisches Patentamt

European Patent Office

Office européen des brevets

(19)

(11) Veröffentlichungsnummer: **0 146 675**
A2

(12) **EUROPÄISCHE PATENTANMELDUNG**

(21) Anmeldenummer: **84107783.7**

(22) Anmeldetag: **04.07.84**

(51) Int. Cl.⁴: **D 06 M 17/00**
**B 32 B 5/22, F 41 H 1/02**
**F 41 H 5/04**

(30) Priorität: **05.08.83 DE 3328415**

(43) Veröffentlichungstag der Anmeldung:
**03.07.85 Patentblatt 85/27**

(84) Benannte Vertragsstaaten:
**AT BE DE FR GB IT NL**

(71) Anmelder: **PMA Peter Mawick GmbH**
**Hauptstrasse 27**
**D-8851 Nordendorf(DE)**

(72) Erfinder: **Mawick, Peter, Dr. Ing.**
**Hauptstrasse 27**
**D-8851 Nordendorf(DE)**

(74) Vertreter: **Kraus, Walter, Dr. et al,**
**Patentanwälte Kraus Weisert & Partner**
**Thomas-Wimmer-Ring 15**
**D-8000 München 22(DE)**

(54) **Kugelschutzmaterial, aus diesem Material hergestellte Kleidungsstücke und die Verwendung des Kugelschutzmaterials.**

(57) Kugelschutzmaterial, welches dadurch gekennzeichnet ist, daß es aus Schichten aus Gewebe aus Nichtendlosgarn und gegebenenfalls aus Schichten aus Gewebe aus Endlosgarn besteht. Ferner wird ein Kugelschutzmaterial beschrieben, daß aus Schichten aus Gewebe aus Endlosgarn und Nichtendlosgarn und gegebenenfalls aus Schichten aus Gewebe aus Endlosgarn und/oder aus Schichten aus Gewebe aus Nichtendlosgarn besteht. Ferner beschreibt die vorliegende Erfindung ein kugelfestes Kleidungsstück, insbesondere eine Weste, sowie die Verwendung des Kugelschutzmaterials.

EP 0 146 675 A2

Croydon Printing Company Ltd.

B e s c h r e i b u n g

Die Erfindung betrifft ein Kugelschutzmaterial, aus diesem Material hergestellte Kleidungsstücke, insbesondere Westen, und die Verwendung des Kugelschutzmaterials.

Moderne Schuß- und Splitterwesten sind aus einem Kugelschutzmaterial hergestellt, bei dem mehrere Lagen eines Aramidgewebes übereinandergelegt sind. Bei diesem Aramidgewebe handelt es sich heute normalerweise um "Kevlar" der Fa. DuPont De Nemours oder "Arenka" der Fa. Enka. Die Fäden dieses Gewebes sind heute aus sog. Endlosmaterial.

Die heute verwendeten Kugelschutzmaterialien, die aus Lagen oder Schichten aus Aramidgewebe aus Endlosmaterial hergestellt sind, besitzen den Nachteil, daß die Splitter- und Schussfestigkeit nur durch sehr viele Gewebelagen und damit auch hohes Gewicht zu erreichen sind. Wird beispielsweise ein "Kevlar"-Gewebe aus Endlosgarn mit Splittermunition beschossen, so stellt man fest, daß alle Splitter die Gewebelagen durchdringen, wenn das Material 17 Lagen "Kevlar"-Gewebe aufweist.

Der vorliegenden Erfindung liegt die Aufgabe zugrunde, ein Kugelschutzmaterial zur Verfügung zu stellen, das kugelfester und splittersicherer ist als die derzeit bekannten Materialien. Erfindungsgemäß sollen weiterhin kugelfeste Kleidungsstücke, insbesondere Westen, zur Verfügung gestellt werden, die kugelbeständiger und splittersicherer sind als die derzeit erhältlichen kugelfesten Kleidungsstücke.

Gegenstand der Erfindung ist ein Kugelschutzmaterial, daß dadurch gekennzeichnet ist, daß es aus Schichten aus Gewebe aus Nichtendlosgarn und gegebenenfalls aus Schichten aus Gewebe aus Endlosgarn besteht.

Die Erfindung betrifft weiterhin ein Kugelschutzmaterial, daß dadurch gekennzeichnet ist, daß es aus Schichten aus Gewebe aus Endlosgarn und Nichtendlosgarn sowie gegebenenfalls aus Schichten aus Gewebe aus Endlosgarn und/oder aus Schichten aus Gewebe aus Nichtendlosgarn besteht.

Die Erfindung betrifft weiterhin kugelfeste Kleidungsstücke, insbesondere Westen, die dadurch gekennzeichnet sind, daß sie aus Schichten aus Gewebe aus Nichtendlosgarn und gegebenenfalls aus Schichten aus Gewebe aus Endlosgarn oder aus Schichten aus Gewebe aus Endlosgarn und nicht Endlosgarn und gegebenenfalls aus Schichten aus Gewebe aus Endlosgarn und/oder aus Schichten aus Gewebe aus Nichtendlosgarn bestehen.

Die Erfindung betrifft weiterhin die Verwendung der oben beschriebenen Kugelschutzmaterialien zur Herstellung von kugelfesten Kleidungsstücken, insbesondere Westen und in Verbindung mit Kunststoffen zur Herstellung von Platten, Formpreßteilen wie Helmen und dergleichen.

Unter Endlosgarnen werden in der vorliegenden Anmeldung Aramidgarne verstanden, die aus extrudierten Endlosfäden,d.h.Einzelfäden, bestehen. Unter Nichtendlosgarnen werden in der vorliegenden Anmeldung Aramidgarne verstanden, die aus Aramidfasern zu Garnen gesponnen werden.
Es wurde jetzt überraschenderweise gefunden, daß ein Kugelschutzmaterial mit wesentlich verbesserten Eigenschaften erhalten werden kann, wenn Gewebeeinlagen verwendet werden, die anstelle des Endlosgarns ein gesponnenes Fasergarn, d.h. ein Nichtendlos garn enthalten.

Das erfindungsgemäße Kugelschutzmaterial besteht aus mehreren Schichten aus Gewebe aus Nichtendlosgarn. Die Anzahl der Schichten hängt von der gewünschten Kugelfestigkeit und Splitterfestigkeit ab. Das erfindungsgemäße Kugelschutzmaterial kann 1 bis 100 Schichten aus Gewebe aus Nichtendlosgarn enthalten.

Gemäß einer weiteren erfindungsgemäßen Ausführungsform enthält das erfindungsgemäße Kugelschutzmaterial mindestens zwei Schichten (vorzugsweise die beiden äußeren Schichten) aus Gewebe aus Nichtendlosgarn und weitere Schichten aus Gewebe aus Endlosgarn. Die Zahl der Schichten aus Gewebe aus Endlosgarn kann innerhalb der bekannten Bereiche liegen. Sie kann beispielsweise 1-100 betragen. Vorzugsweise beträgt sie 8 bis 40.

Ein bevorzugtes erfindungsgemäßes Kugelschutzmaterial besteht aus Schichten aus Gewebe aus Endlosgarn, beispielsweise 10 bis 20 und mindestens 2 Schichten aus Gewebe aus Nichtendlosgarn. Bei einer besonders bevorzugten Ausführungsform sind die Schichten aus Nichtendlosgarn als Ober- und Unterschicht vorgesehen.

Bei gleichzeitiger Verwendung von Gewebe aus Endlosgarn und aus Fasergarn ist es möglich, wie im obigen Versuchsbeispiel beschrieben, die verschiedenen Lagen Gewebe aus Endlosgarn außen mit Gewebe aus Endlosgarn zu ummanteln. Es ist jedoch auch möglich, Gewebe aus Nichtendlosgarn innerhalb der übrigen Lagen Endlose-Gewebe zu verwenden. Weiterhin besteht die Möglichkeit, Gewebe herzustellen, bei welchem innerhalb des einzelnen Gewebes gleichzeitig Endlos- und Nichtendlosgarn verwebt wird. Dies kann dadurch geschehen, daß in Kett- oder Schußrichtung neben den Endlosfäden einzelne Fäden aus Nichtendlosgarn gewählt werden, oder dadurch, daß Endlosgarn und Nichtendlosgarn zu einem Faden zusammengefaßt werden und dann diese Fäden in Schuß- bzw. Kettrichtung verwebt werden.

Das für die Schußwesten eingesetzte Fasergarn(Endlosgarn)bzw.Fasergewebe kann durch eine Spezialausrüstung verschiebefest behandelt werden.

Das erfindungsgemäße Kugelschutzmaterial kann somit aus den bekannten Kugelschutzmaterialien bestehen, wie sie beispielsweise in den DBGM 80 24 488.8, 80 24 487.7 beschrieben werden, wobei das erfindungsgemäße Kugelschutzmaterial zusätzlich eine oder mehrere Schichten aus Gewebe aus Nichtendlosgarn und/oder aus Gewebe aus Endlosgarn und Nichtendlosgarn umfasst.Es werden beispielsweise bei dem oben beschriebenen Kevlar-Gewebe mit 16 Lagen aus Endlosgarn zwei der äußeren Lagen, d.h. die Ober- und Unterlage,durch ein Aramidgewebe aus Nichtendlosfasern ersetzt,und wird dieses Material dann mit Splittermunition beschossen, so stellt man überraschenderweise fest, daß alle Splitter bei dem Beschuss einwandfrei gehalten werden. Dies war überraschend und hat nicht nahegelegen, da es sich bei dem Aramidgewebe um das gleiche Grundmaterial handelt,und da außerdem bei dem Aramidgewebe aus Nichtendlosfasern das Flächengewicht nur halb so groß war wie bei dem Gewebe aus Endlosfäden.

In den beigefügten Zeichnungen sind beispielhafte erfindungsgemäße Ausführungsformen dargestellt. Es zeigen :

    Fig. 1   einen Querschnitt durch ein erfindungsgemäßes Kugelschutzmaterial und

    Fig. 2   eine Draufsicht in vergrößertem Maßstab auf Gewebe aus Endlosgarn und Nichtendlosgarn.

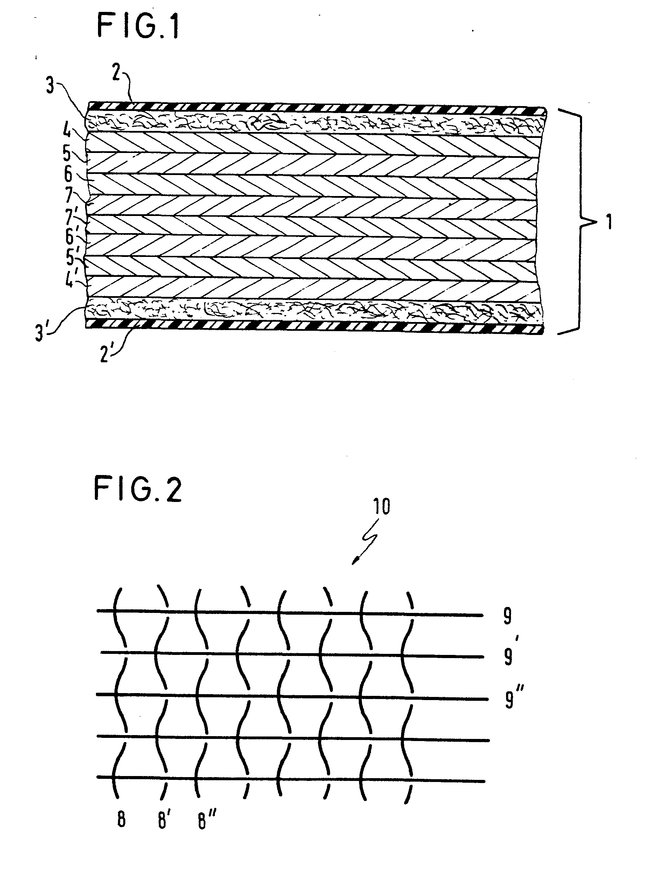

Bei dem in Fig. 1 dargestellten Gewebe 1 umfaßt das Gewebe mehrere Schichten 4,5,6,7, und 4',5',6',7' aus Endlosgarn. Die Anzahl der Schichten aus Endlosgarn beträgt im dargestellten Fall 8. Sie kann jedoch,wie oben ausgeführt wurde, beliebig variiert werden. Das in Fig. 1 dargestellte erfindungsgemäße Material weist als Ober- und Unterschichten 3 und 3' Gewebeschichten auf, die aus einem Nichtendlosfaden hergestellt sind. Die Gewebeschichten aus Nichtendlosgarn können auch als mittlere Schichten vorhanden sein. Es ist weiterhin möglich, daß beispielsweise 3 oder 4 Schichten aus Nichtendlosgarn vorgesehen sind.

Das in Fig. 1 dargestellte Material ist weiterhin an seinen Außenseiten mit einer wasserdichten Umhüllung 2 und 2' versehen.

Anstelle der Schichten aus Nichtendlosfäden kann das erfindungsgemäße Material auch Schichten aufweisen, die aus dem in Fig. 2 dargestellten Gewebe hergestellt sind. Das in Fig. 2 dargestellte Gewebe 10 besteht aus Nichtendlosfäden 8,8',8" sowie aus den Endlosfäden 9,9';9". Die Anordnung in Kett- und Schußrichtung der beiden verschiedenen Fäden kann beliebig variiert werden. Das erfindungsgemäße Material kann eine oder mehrere Schichten, die aus einem Gewebe aus Nichtendlosfäden und Endlosfäden bestehen, umfassen.

Die erfindungsgemäßen Schutzkleidungsstücke, insbesondere Westen, bestehen aus dem erfindungsgemäßen Kugelschutzmaterial. Man kann all die Schutzkleidung herstellen, die aus dem bekannten Aramidgewebe hergestellt worden ist, wobei die erfindungsgemäße Schutzkleidung sich dadurch auszeichnet, daß sie wesentlich kugelfester und splittersicherer ist als die bekannten Bekleidungsstücke.

Ende der Beschreibung.

PMA Peter Mawick GmbH, 8851 Nordendorf

---

Kugelschutzmaterial, aus diesem Material hergestellte Kleidungsstücke und die Verwendung des Kugelschutzmaterials

---

P a t e n t a n s p r ü c h e

1. Kugelschutzmaterial, dadurch  g e k e n n z e i c h n e t,  daß
es aus Schichten aus Aramidgewebe aus Nichtendlosgarn (gesponnene
Aramidfasern) (2,2') und ggf. aus Schichten aus Gewebe aus Endlosgarn (extrudierte endlose Aramidfasern) (4,5,6,7,4',5',6',7') besteht.

2. Kugelschutzmaterial, dadurch  g e k e n n z e i c h n e t,  daß
es aus Schichten aus Gewebe (10) aus Endlosgarn (9,9',9") und Nichtendlosgarn (8,8',8") und ggf. aus Schichten aus Gewebe aus Endlosgarn und/oder aus Schichten aus Gewebe aus Nichtendlosgarn besteht.

3. Kugelschutzmaterial nach Anspruch 1, dadurch  g e  -

k e n n z e i c h n e t , daß es aus mehreren Schichten aus Gewebe, aus Endlosgarn (4,5,6,7,4',5',6',7') und aus mindestens zwei Schichten aus Gewebe aus Nichtendlosgarn (2,2') und/oder Schichten aus Gewebe aus Nichtendlosgarn und Endlosgarn besteht.

4. Kugelschutzmaterial nach einem der Ansprüche 1,2 oder 3 dadurch g e k e n n z e i c h n e t , daß die Schichten aus Gewebe aus Nichtendlosgarn und/oder die Schichten aus Gewebe aus Nichtendlosgarn und Endlosgarn als Ober- und Unterschichten (2,2') vorgesehen sind.

5. Kugelschutzmaterial nach einem der Ansprüche 2 bis 4, dadurch g e k e n n z e i c h n e t , daß das Gewebe aus Endlosgarn und Nichtendlosgarn aus Gewebe besteht, bei welchem innerhalb des einzelnen Gewebes gleichzeitig Endlosgarn und Nichtendlosgarn verwebt ist.

6. Kugelschutzmaterial nach einem der Ansprüche 2 bis 4, dadurch g e k e n n z e i c h n e t, daß das Gewebe aus Endlosgarn und Nichtendlosgarn aus Gewebe besteht, bei dem in Kett- oder Schußrichtung neben den Endlosfäden einzelne Nichtendlosfäden verwebt sind.

7. Kugelschutzmaterial nach einem der Ansprüche 2 bis 4, dadurch g e k e n n z e i c h n e t , daß in dem Gewebe aus Endlosgarn und Nichtendlosgarn das Endlosgarn und Nichtendlosgarn zu einem Faden zusammengefasst sind.

8. Kugelschutzmaterial nach mindestens einem der vorher-gehenden Ansprüche, dadurch g e k e n n z e i c h n e t , daß das Endlosgarn und das Nichtendlosgarn aus Aramidmaterial bestehen.

9. Kugelfestes Kleidungsstück insbesondere Weste, dadurch g e k e n n z e i c h n e t , daß es aus einem Material nach einem der Ansprüche 1 bis 8 besteht.

10.    Verwendung des Kugelschutzmaterials nach einem
der Ansprüche 1 bis 8 zur Herstellung von kugelfesten
Kleidungsstücken insbesondere Westen.

11.    Verwendung des Kugelschutzmaterials nach einem
der Ansprüche 1 bis 8 in Verbindung mit Kunststoffen zur
Herstellung von Platten, Formpressteilen wie Helmen und
dergleichen.

1/1

# FIG.1

# FIG.2